# EUROPEAN PATENT APPLICATION

(11) **EP 4 579 205 A1**
(43) Date of publication of application: **02.07.2025**
(21) Application number: 24174235.2
(22) Date of filing: 04.05.2024
(51) Int. Cl.: G01L 3/14, G01L 3/10

(54) **TORSIONAL MOMENT TRANSDUCER**

(30) Priority: 31.12.2023 PL 44744723
(71) Applicant: Siec Badawcza Lukasiewicz Przemyslowy Instytut Automatyki i Pomiarow PIAP, 02-486 Warszawa (PL)
(72) Inventor: BUCINSKAS, Vytautas, LT-10231 Vilnius (LT); DZEDZICKIS, Andrius, LT-13107 Vilnius (LT); SZWCZYK, Roman, 04-633 Warszawa (PL); NOWICKI, Michal, 02-495 Warszawa (PL); OSTASZEWSKA-LIZEWSKA, Anna, 01-318 Warszawa (PL); NOWAK, Pawel, 02-304 Warszawa (PL); GAZDA, Piotr, 05-300 Minsk Mazowiecki (PL)

(57) **Abstract**

The transducer (1) is mounted between the adjoining ends of the first (4) and the second (5) section of the shaft that transfers torsional moment. It contains the first (2) half and the second (3) half of the magnetic core, a ring permanent magnet (9), a magnetic field sensor (20), and an elastic component in the form of a helical spring (12) with its distinct first (13) and second (14) ends. Each of these halves (2, 3) of the magnetic core has a sleeve (6, 8) and at least two poles (7', 7") that are distributed at a regular spacing along the circumference of the sleeves (6, 8). The first half (2) of the magnetic core is attached on the end of the first section (4) of the shaft, while the second half (3) of the magnetic core is attached on the end of the second section (5) of the shaft. Each pole (7', 7") of one half (2, 3) of the magnetic core is adjoining to the corresponding pole (7', 7") of the second half (2, 3) of the magnetic core, forming a measuring aperture (19) for the magnetic field sensor (20). The permanent magnet (9) is attached coaxially on the sleeve (6) of the first half (2) of the magnetic core, while the spring (12) is located coaxially with both halves (2, 3) of the magnetic core and is attached by its first end (13) to the first half (2) of the magnetic core and by its second end (14) to the second half (3) of the magnetic core.

## Description

The present invention relates to a torsional moment transducer, mounted between the adjoining ends of the first and the second sections of the shaft that transfers said torsional moment.

Various methods of torsional moment measurement are disclosed. If the component that transfers said moment does not rotate, one can use strain gauges that are glued on said component and register the component's elastic strain, which depends on the value of the moment that said component transfers at a given time. The application of strain gauges for the measurement of the torsional moment of a rotating shaft gives rise to problems related to the signal connection of the aforementioned gauges with the remaining part of the measuring system. These inconveniences are not present in magnetoelastic transducers, mounted between the adjoining ends of the first and the second sections of the shaft that transfers the measured torsional moment. Such type of transducers measure the change in the magnetic field, which depends of the degree of the torsional strain of the elastic component. An example of a magnetoelastic transducer is disclosed in PL206556B1. Said transducer has an axially attached ring magnetic core and windings that magnetize said core and windings that measure the level of core magnetization.
KR101220881B1 discloses a magnetoelastic torsional moment transducer, mounted between the adjoining ends of the first and the second sections of the shaft that transfers said torsional moment. Said transducer has a source of magnetic field in the form of permanent magnets, and a magnetic field sensor in the form of a Hall effect sensor. Both ends of the shaft are connected with each other torsionally by means of a cam assembly and four cylindrical circumferential springs. The position of the permanent magnets in relation to the Hall effect sensor depends on the degree of tension of said springs, which means on the amount of the torsional moment that causes said tension.

Object of the invention is to create a magnetoelastic torsional moment transducer, which has a simple structure.
This object is achieved by a transducer according to the invention, which is mounted between the adjoining ends of the first and the second sections of the shaft that transfers said torsional moment. Both the said shaft sections are connected with each other by means of an elastic component that is susceptible to the said torsional moment. The transducer contains a permanent magnet and a sensor of the magnetic field that comes from said magnet and depends on the angle of the relative torsion of said two adjoining shaft sections. The invention consists in that the transducer contains the first half and the second half of the magnetic core, a ring permanent magnet, and an elastic component in the form of a spring with a helical path of the wire that forms the spring and with distinct first and second ends of said wire. Each half of the magnetic core has a sleeve for the purpose of attachment at the end of the corresponding section of the shaft, and at least two poles that are distributed at a regular spacing along the circumference of said sleeves. The first half of the magnetic core is attached on the said end of the first section of the shaft, while the second half of the magnetic core is attached on the said end of the second section of the shaft. Each pole of one half of the magnetic core is adjoining to the corresponding pole of the second half of the magnetic core, forming a measuring aperture for the magnetic field sensor. The permanent magnet is attached coaxially on the sleeve of the first half of the magnetic core. The spring is located coaxially with both halves of the magnetic core and is attached by its first end to the first half of the magnetic core and by its second end to the second half of the magnetic core.
In one of the variants of the invention, the magnetic core pole has the form of a curve with the central angle of 90 degrees, with its beginning on the outer surface of the sleeve of one of the halves of the magnetic core and its free end adjoining to the free end of the corresponding pole of the second half of the magnetic core.
In another variant of the invention, the cross-section of the pole diminishes from the beginning of its curve in the direction of its free end.
In another variant of the invention, the ring permanent magnet is set immovably in the neck of the end of the sleeve of the first half of the magnetic core, adjoining to the sleeve of the second half of the magnetic core.
In another variant of the invention, the outer diameter of the ring permanent magnet is equal to the outer diameter of the sleeve on which said magnet is set.
In another variant of the invention, the spring is a cylindrical spring with the inner diameter that is essentially equal to the outer diameter of the ring permanent magnet, which spring is coiled out of wire with the circular cross-section. The distinct ends of said spring are straight sections of said wire, running in parallel to the spring axis.
In still another variant of the invention, the first distinct end of the spring is located in an outer seat of the first half of the magnetic core, while the second distinct end of said spring is located in an outer seat of the second half of the magnetic core.
The transducer according to the invention contains a small number of parts and it is essentially devoid of movable parts that might be susceptible to operational wear, at the same time ensuring a readout of the current torsional moment that is precise and stable over time. The invention is fit for use for measurement of the moment that acts both on an immovable shaft and on a rotating shaft, without the need to provide power to the transducer's components that are located on the shaft. The measuring range of said transducer can be modified in a simple manner only by replacing a single spring with one that has a different torsional rigidity.

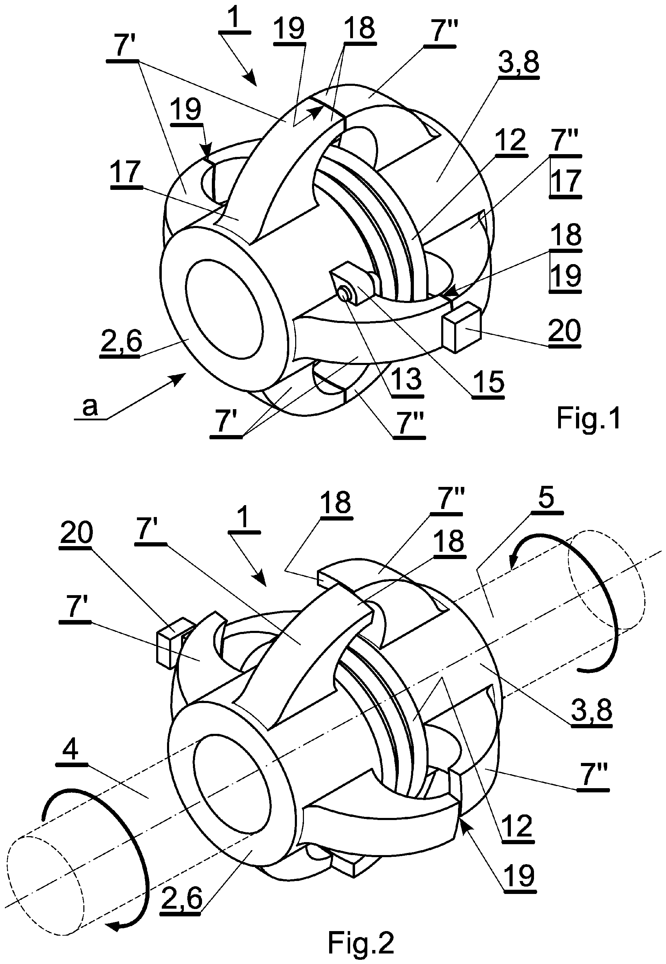

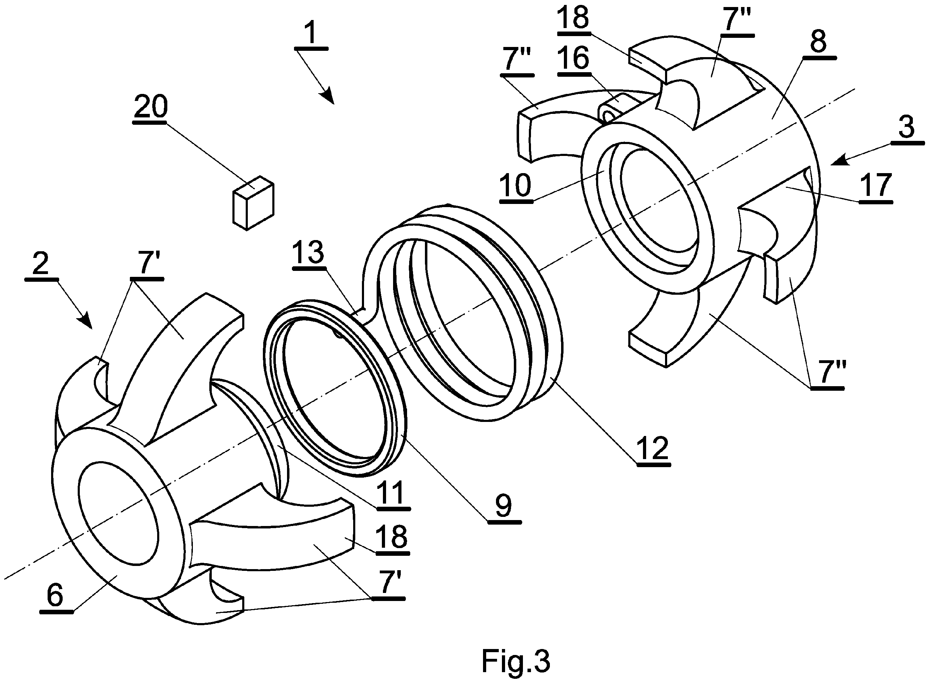

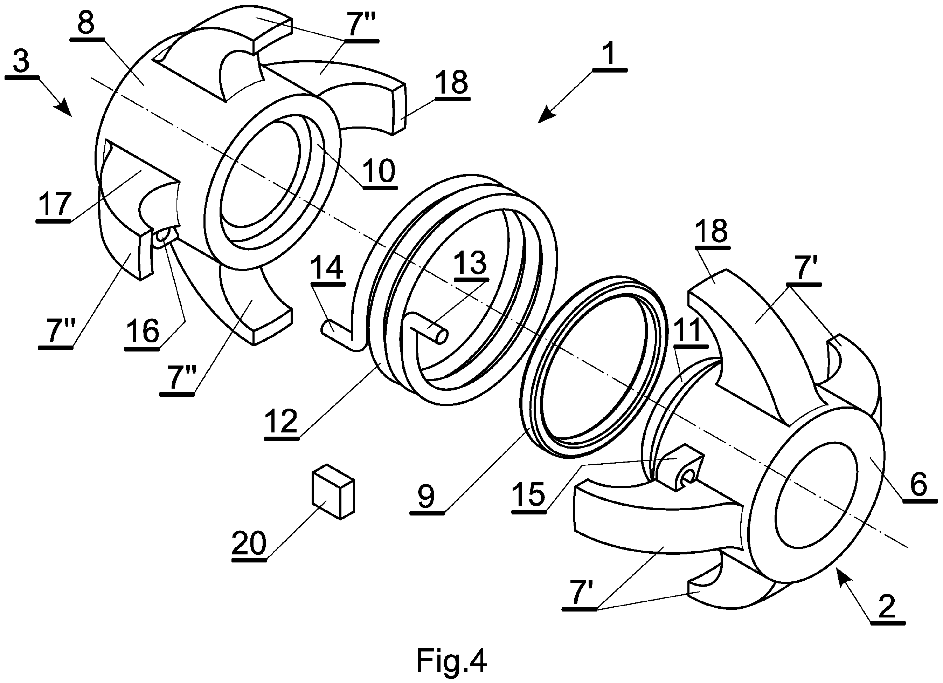

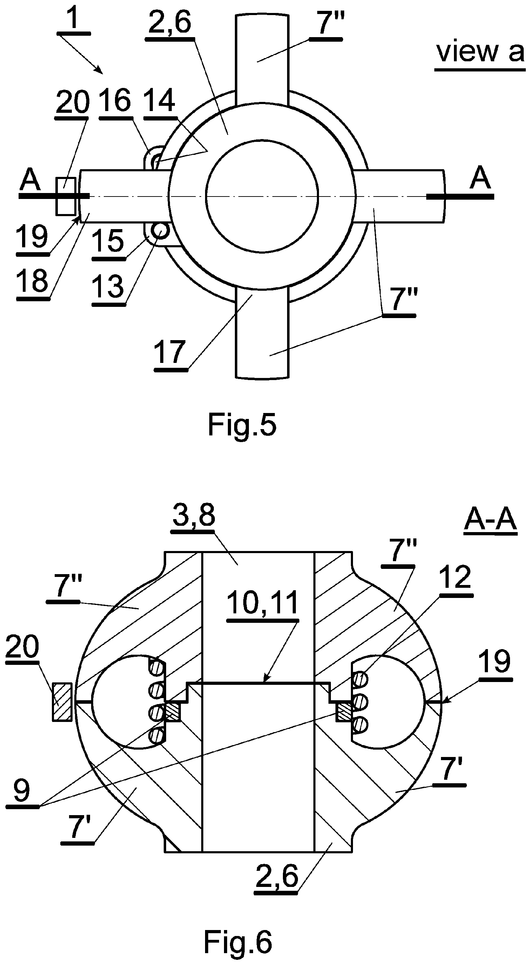

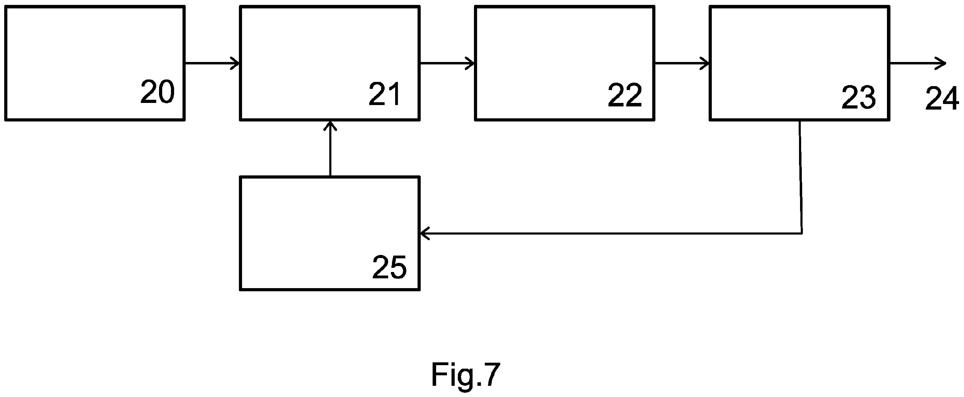

An embodiment of the invention is described below and reflected in a drawing, with Fig.1 presenting an axonometric view of the transducer according to the invention in the unloaded state, and with Fig.2 presenting the same view of the transducer from Fig.1 that is subject to torsional moment. Fig.3 and Fig.4 present the transducer from Fig.1 in two axonometric exploded views. Fig.5 presents the transducer from Fig.1 in a front view, while Fig.6 presents a cross-section of said transducer being the plane indicated in Fig.5. Fig.7 presents a block diagram of an example system that processes the signal generated by the transducer according to the invention.

The embodiment of the transducer 1 has a magnetic core, which is composed of its first 2 and second 3 half. The transducer 1 is mounted between the adjoining ends of the first 4 and the second 5 section of the shaft that transfers the measured torsional moment. The first half 2 of the magnetic core contains the first sleeve 6 and four outer poles 7', while the second half 3 of the magnetic core contains the second sleeve 8 and next four poles 7". Both parts 2 and 3 of the magnetic core are made of steel and its poles 7' and 7" are an integral part with the corresponding sleeves 6 and 8. The first sleeve 6 has the inner diameter of 30 mm and is set immovably by a disclosed method on the end of the first section 4 of the shaft. Similarly, the second sleeve 8, with the inner diameter of 30 mm, is set by the same method on the second section 5 of the shaft. Poles 7' and 7" protrude out of the outer cylindrical surface of the sleeves 6 and 8, respectively, with the diameter of 50 mm. The source of the magnetic field in the magnetic core (2 and 3) is a permanent magnet 9, which is a cylindrical neodymium magnet NdFeB with the outer diameter of 30 mm, with the inner diameter of 22 mm, and with the width of approximately 5 mm. The magnet 9 is set immovably by a known method in the outer relief of the end of the first sleeve 6, which end is adjoining to the second sleeve 8. Both sleeves 6 and 8 are centered in relation to each other with the use of an inner neck 10 of the second sleeve 8, into which the outer neck 11 of the first sleeve 6 goes. Both sleeves 2 and 3 of the magnetic core are coupled with each other by means of a cylindrical spring 12 with a helical path of the wire that forms the spring, with the wire diameter of 4 mm. The spring 12 is made of spring bronze and has three coils with the inner diameter that is essentially equal to the outer diameter of the magnet 9, allowing for the necessary clearance. The first 13 and the second 14 ends of said wire are distinct by their shape of straight sections that run in parallel to the spring 12 axis. The spring 12 is connected with the halves 2 and 3 of the magnetic core by passing its first end 13 through the outer seat 15 of the first half 2 of the magnetic core and by passing its second end 14 through the outer seat 16 of the second half 3 of the magnetic core. Such an elastic coupling of both sections 4 and 5 of the shaft makes the torsional moment applied to said shaft cause the rotation of one (2) half of the magnetic core in relation to the second (3) half, and the angle of said rotation depends on the rigidity of the spring 12 and on the amount of the applied moment, which is marked in Fig.2 by two opposite arrows. Each pole 7' and 7" of the magnetic core has the form of a curve with the central angle of 90 degrees. The curve of each pole 7', 7" has its beginning 17 on the outer surface of the corresponding sleeve (6, 8) and has a free end 18. The adjoining free ends 18 of the poles 7' and 7" of both halves 6, 8 of the magnetic core form the measuring apertures 19. The poles 7' and 7" have a rectangular cross-section with the width of 14 mm and the height that becomes smaller from the beginning 17 of the curve in the direction of its free end 18. All poles 7' and 7" have an identical shape, the height of 24 mm, and are distributed every 90 degrees along the circumferences of the sleeves 6 and 8. A known Hall effect sensor 20, which has the task of measuring the intensity of the magnetic field that is scattered from the measuring aperture 19, is located opposite the measuring aperture 19. The described structure of the transducer according to the invention makes the intensity of the magnetic field received by the sensor 20 increase with the increase in the relative displacement of the free ends 18 of the poles 7' and 7" that form the successive measuring apertures 19, which means that it increases with the increase in the amount of the torsional moment applied to the shaft (4, 5), which overcomes the resistance of the spring 12. A scheme of the system of processing the measuring signal from the sensor 20 is presented in Fig.7. The signal from the sensor 20 is sampled by an analog-to-digital converter 21 and is stored in a random access memory (RAM) block 22. The data that presents the dynamic course of the changes in the magnetic signal is collected from the memory block 22 by the microprocessor 23 and is processed. The ready measurement result is output from the microprocessor 23 to the output 24 of the measuring system. The microprocessor 22 additionally controls the analog-to-digital converter 21 via the sampling synchronization block 25.

## Claims

1. A torsional moment transducer, mounted between the adjoining ends of the first and the second sections of the shaft that transfers said torsional moment, connected with each other by means of an elastic component that is susceptible to the said torsional moment, which transducer contains a permanent magnet and a sensor of the magnetic field that comes from said magnet and depends on the angle of the relative torsion of said two adjoining shaft sections, **characterised in that** it contains the first (2) half and the second (3) half of the magnetic core, a ring permanent magnet (9), and an elastic component in the form of a spring (12) with a helical path of the wire that forms the spring and with distinct first (13) and second (14) ends of said wire, wherein each of these halves (2, 3) has a sleeve (6, 8) for the purpose of attachment at the end of the corresponding section (4, 5) of the shaft, and at least two poles (7', 7") that are distributed at a regular spacing along the circumference of the sleeves (6, 8), the first half (2) of the magnetic core is attached on the said end of the first section (4) of the shaft, while the second half (3) of the magnetic core is attached on the said end of the second section (5) of the shaft, while each pole (7', 7") of one half (2, 3) of the magnetic core is adjoining to the corresponding pole (7', 7") of the second half (2, 3) of the magnetic core, forming a measuring aperture (19) for the magnetic field sensor (20), the permanent magnet (9) is attached coaxially on the sleeve (6) of the first half (2) of the magnetic core, while the spring (12) is located coaxially with both halves (2, 3) of the magnetic core and is attached by its first end (13) to the first half (2) of the magnetic core and by its second end (14) to the second half (3) of the magnetic core.

2. The transducer according to claim 1, **characterised in that** the magnetic core pole (7' 7") has the form of a curve with the central angle of 90 degrees, with its beginning (17) on the outer surface of the sleeve (6, 8) of one of the halves (2, 3) of the magnetic core and its free end (18) adjoining to the free end (18) of the corresponding pole (7' 7") of the second half (2, 3) of the magnetic core.

3. The transducer according to claim 2, **characterised in that** the cross-section of the pole (7', 7") diminishes from the beginning (17) of the curve in the direction of its free end (18).

4. The transducer according to claim 1 or 2 or 3, **characterised in that** the ring permanent magnet (9) is set immovably in the neck of the end of the sleeve (6) of the first half (2) of the magnetic core, adjoining to the sleeve (8) of the second half (3) of the magnetic core.

5. The transducer according to claim 4, **characterised in that** the outer diameter of the ring permanent magnet (9) is equal to the outer diameter of the sleeve (6) on which said magnet (9) is set.

6. The transducer according to claim 1 or 2 or 3 or 4 or 5, **characterised in that** the spring (12) is a cylindrical spring with the inner diameter that is essentially equal to the outer diameter of the ring permanent magnet (9), which spring is coiled out of wire with the circular cross-section, wherein the distinct ends (13, 14) of said spring (12) are straight sections of said wire, running in parallel to the spring (12) axis .

7. The transducer according to claim 6, **characterised in that** the first distinct end (13) of the spring (12) is located in an outer seat (15) of the first half (2) of the magnetic core, while the second distinct end (14) of the spring (12) is located in an outer seat (16) of the second half (3) of the magnetic core.
